# EUROPÄISCHE PATENTSCHRIFT

(11) **EP 3 208 001 B1**
(45) Veröffentlichungstag und Bekanntmachung des Hinweises auf die Patenterteilung: **07.08.2019**
(21) Anmeldenummer: 17156885.0
(22) Anmeldetag: 20.02.2017
(51) Int. Cl.: B07B 4/08, B07B 4/02, B07B 9/02, B03B 9/06

(54) **WINDSICHTER MIT DREIFACHTRENNUNG**
AIR CLASSIFIER WITH TRIPLE SEPARATION
SÉPARATEUR PNEUMATIQUE DOTÉ D'UNE TRIPLE SÉPARATION

(30) Priorität: 18.02.2016 DE 202016100858 U
(43) Veröffentlichungstag der Anmeldung: 23.08.2017
(73) Patentinhaber: Westeria Fördertechnik GmbH, 48346 Ostbevern (DE)
(72) Erfinder: SPINNEKER, Martin, 49509 Recke (DE); WESTBROCK, Bernhard, 48291 Telgte - Westbevern (DE)
(74) Vertreter: Habbel, Ludwig

(56) Entgegenhaltungen:
- EP-A2- 0 546 442
- CN-A- 1 724 179
- JP-A- S62 212 287
- KR-A- 20150 118 382
- US-A- 1 593 729
- US-A1- 2014 166 552

## Beschreibung

Die Erfindung betrifft einen Windsichter nach dem Oberbegriff des Anspruchs 1.

Aus der US 2014/166552 A1 und aus der CN 1 724 179 A sind gattungsgemäße Windsichter bekannt.

Aus der KR 2015 0118382 A ist ein Windsichter bekannt, bei dem eine Materialmischung auf einem Förderband in Vibrationen versetzt wird. Mittels eines quer zum Förderband gerichteten Luftstroms wird Fremdmaterial aus der Materialmischung entfernt.

Üblicherweise ist die Auftrennung einer Gutmischung, welche aus mehreren Fraktionen besteht, mit einer anderweitig ausgestalteten Sichtstufe vorgesehen. Die gattungsgemäße Ausgestaltung des Windsichters ist häufig einer derartig anderen Sichteinrichtung nachgeschaltet, beispielsweise kann vorgesehen sein, in einer ersten Trennstufe bzw. Sichtstufe schweres Material wie Steine oder dergleichen aus der Gutmischung abzutrennen. Die verbleibende leichtere Fraktion der Gutmischung kann dann mittels des gattungsgemäßen Windsichters erneut in zwei unterschiedlich leichte Fraktionen getrennt werden. Im Bereich der Abfallwirtschaft können beispielsweise Schuttsteine und dergleichen in der genannten ersten Sichtstufe aus der Gutmischung abgetrennt werden, während die verbleibende leichtere Gutmischung dann noch beispielsweise Holz enthalten kann sowie Plastikfolien. Um diese zweite Gutmischung nicht nur thermisch verwerten zu können, sondern beispielsweise kompostieren zu können, ist die Abtrennung der Plastikfolien aus dieser zweiten, leichteren Gutmischung mit Hilfe eines gattungsgemäßen Windsichters möglich.

Problematisch ist dabei, dass die auf dem Förderband aufliegende Gutmischung dazu neigt, in ihr enthaltene Kunststofffolien auf dem Förderband abzudecken und festzuhalten, so dass nur ein unerwünscht geringer Anteil der in dieser Gutmischung enthaltene Kunststofffolien durch den nach oben geführten Luftstrom aus dieser Gutmischung herausgetrennt werden kann.

US 2014/166552 A1 offenbart einen Windsichter gemäß dem Oberbegriff des Anspruchs 1.

Der Erfindung liegt die Aufgabe zugrunde, einen gattungsgemäßen Windsichter dahingehend zu verbessern, dass dieser mit möglichst hoher Trenn-Effizienz die Abtrennung leichterer Bestandteile aus der Gutmischung ermöglicht.

Diese Aufgabe wird durch einen Windsichter mit den Merkmalen des Anspruchs 1 gelöst. Vorteilhafte Ausgestaltungen sind in den Unteransprüchen beschrieben.

Die Erfindung schlägt mit anderen Worten vor, vor und hinter der Knickstelle Wände aus einem festen Material vorzusehen, beispielsweise aus Blech. Um die Passage von zu großen Bestandteilen der Gutmischung zu ermöglichen, die nämlich größer sind als der Spalt zwischen den Wänden und dem Förderband, ist vorschlagsgemäß vorgesehen, zumindest die in Förderrichtung vorderen und hinteren Wände höhenverstellbar auszugestalten. Zeitgesteuert oder durch einen Sensor können daher diese Wände angehoben werden, so dass in regelmäßigen Abständen oder bedarfsweise der erwähnte Spalt vergrößert wird und die erwähnten großen Bestandteile der Gutmischung die Absaugstelle passieren können. Eine schnelle Beweglichkeit der Wände bei gleichzeitig besonders robuster und betriebssicherer Konstruktion wird vorschlagsgemäß dadurch ermöglicht, dass die Wände jeweils durch Wickelbänder mit einer Wickelachse verbunden sind, so dass je nach Drehrichtung der Wickelachse die damit verbundene Wand angehoben oder abgesenkt werden kann.

Vorschlagsgemäß ist vorgesehen, das Förderband über eine Knickstelle zu führen und es hinter der Knickstelle nach unten abgewinkelt weiter zu führen. Bei einem schräg aufwärts verlaufenden Förderband kann dies bedeuten, dass der zweite Abschnitt hinter der Knickstelle horizontal verläuft, oder ebenfalls aufwärts, allerdings weniger steil aufwärts als der erste Abschnitt. Bei einem annähernd horizontal oder leicht abwärts verlaufenden ersten Abschnitt des Förderbandes ist dementsprechend vorschlagsgemäß vorgesehen, den zweiten Abschnitt hinter der Knickstelle steiler abwärts zu führen als den ersten Abschnitt. Der Übergang vom ersten zum zweiten Abschnitt erfolgt dabei bewusst nicht langsam, in einem weiten Radius, sondern vielmehr in einer möglichst scharf ausgeprägten Knickstelle, so dass bei einer entsprechenden Laufgeschwindigkeit des Förderbandes die Gutmischung kurz vom Förderband abhebt. Auf diese Weise kann die Luftströmung nicht nur an der oberen Oberfläche der Gutmischung angreifen, sondern auch unterhalb der Gutmischung, so dass auf diese Weise ein höherer Anteil des leichteren Guts aus der Gutmischung mit dem Luftstrom nach oben transportiert und aus der Gutmischung abgetrennt werden kann.

Die Erfindung geht dabei von der Überlegung aus, dass aufgrund der unterschiedlichen Wurfparabeln das schwerere Material üblicherweise früher auf das abziehende Band fällt als das leichtere Material, wenn die Gutmischung die erste Sichterstufe verlässt. Dies hat zur Folge, dass das leichtere Material über dem schwereren liegt, bevor die Gutmischung in die zweite Trennstufe gelangt, sodass die nachfolgende Materialtrennung in der zweiten Sichterstufe vereinfacht wird. Eine Problematik, dass beispielsweise ein schwereres Holzteil über einer Folie liegt und die Luftströmung in der zweiten Trenn- bzw. Sichterstufe dieses Holzteil nicht anheben kann, so dass die Folie in der Gutmischung verbleibt und somit das Trennergebnis verschlechtert wird, wird daher weitestgehend vermieden. Daher ist die vorschlagsgemäße Kombination der beiden Systeme besonders vorteilhaft, da nicht nur insgesamt eine Auftrennung der ursprünglichen Materialmischung in mehr unterschiedliche Fraktionen erfolgt, sondern auch eine Art Synergieeffekt dadurch erzielt wird, dass bereits durch die erste Sichterstufe eine Vortrennung in zwei Lagen auf dem Abzugsband erfolgt ist, wobei das leichtere Gut oben und das schwerere Gut unten liegt.

Als leichteres Gut wird im Sinne des vorliegenden Vorschlags das Gut verstanden, welches durch einen Luftstrom eher entgegen der Schwerkraft nach oben mitgerissen werden kann als das andere, dementsprechend schwerere Gut der Gutmischung. Dabei ist diese Bezeichnung als leichteres Gut eine in der Praxis gebräuchliche, umgangssprachliche Bezeichnung, die weder das tatsächliche Stückgewicht eines bestimmten Partikels betrifft noch dessen spezifisches Gewicht, also bezogen auf einen definierten Rauminhalt. Beispielsweise können die erwähnten Kunststofffolien ein vergleichsweise höheres Gewicht aufweisen als andere Bestandteile der Gutmischung, und ihr Kunststoffmaterial kann ggf. ein höheres spezifisches Gewicht (Raumgewicht) aufweisen als andere Bestandteile der Gutmischung; aufgrund ihrer vergleichsweise großflächigen Ausgestaltung können sie jedoch leichter vom Luftstrom aus der Gutmischung abgetrennt werden, so dass sie dementsprechend sowohl umgangssprachlich als auch im Rahmen des vorliegenden Vorschlags als das leichtere Gut bezeichnet werden.

Vorteilhaft kann das Gebläse als Sauggebläse ausgestaltet und oberhalb des Förderbandes angeordnet sein. Dies ermöglicht nicht nur eine vergleichsweise einfache Luftführung und dementsprechend einfache konstruktive Ausgestaltung des Windsichters, sondern ermöglicht auch das Nachrüsten vorhandener Anlagen mit der vorschlagsgemäß ausgestalteten Trennstufe. Der Bereich, in welchem das Gebläse auf die Gutmischung einwirkt, wird auch als Gebläsestelle bezeichnet, und bei der Ausgestaltung als Sauggebläse kann diese Stelle dementsprechend als Absaugstelle bezeichnet werden, an welcher nämlich die leichten Bestandteile von dem Förderband abgesaugt werden.

Vorteilhaft kann ein haubenartiges Gehäuse mit Wänden die Kanalisierung des Luftstroms ermöglichen.

Eine bedarfsgerechte Ansteuerung der Wände kann beispielsweise mittels einer Klappe erfolgen, die pendelbeweglich gelagert ist und oberhalb des Förderbandes angeordnet ist, so dass die entsprechend großen Bestandteile der Gutmischung gegen diese so genannte Sensorklappe geraten und diese auslenken. Im Vergleich zu beispielsweise einer Lichtschranke werden durch die größere Massenträgheit der Sensorklappe Fehlauslösungen vermieden, wie sie ansonsten beispielsweise durch Leichtstoffe wie Folien erfolgen könnten.

Vorteilhaft kann der vorschlagsgemäß ausgestaltete Windsichter als zweite Trennstufe hinter einer ersten Trennstufe angeordnet sein. Eine als Grobmischung bezeichnete Mischung aus drei unterschiedlichen Fraktionen wird mittels eines Zuführungsbandes zu dieser ersten Trennstufe zugeführt. Die erste Trennstufe weist eine Trommel auf, deren oberer Trommelumfang sich in Förderrichtung des Zuführbandes dreht. Aufgrund der Laufgeschwindigkeit des Zuführungsbandes werden leichtere Bestandteile der Grobmischung an die Trommel herangetragen, während schwerere Bestandteile als erste abzutrennende Fraktion zwischen dem Zuführungsband und der Trommel nach unten fallen. Ein so genanntes Stützgebläse führt einen Luftstrom in diesen Spalt zwischen Zuführungsband und Trommel, wobei dieser Luftstrom nach oben gerichtet ist und insofern das leichtere Gut aus der Grobmischung davor bewahrt, zusammen mit den schweren Bestandteilen in dem Spalt zwischen Zuführungsband und Trommel nach unten zu fallen. Dieser leichtere Anteil der Grobmischung wird anschließend auf dem oberen Trommelumfang gefördert und fällt schwerkraftbedingt jenseits des Zuführungsbandes vom Trommelumfang nach unten herab, auf das Förderband des vorschlagsgemäßen Windsichters. Dort stellt die um die Knickstelle des Förderbandes herum vorgesehene Trennstufe die zweite Trennstufe des gesamten Windsichters dar, so dass mit dem vorschlagsgemäß ausgestalteten Windsichter eine ursprüngliche Grobmischung in insgesamt drei Fraktionen getrennt werden kann.

Gegebenenfalls kann vorgesehen sein, eine Absaugstelle mit dem erwähnten Gebläse dort an dem Förderband einzurichten, wo dies keine Knickstelle aufweist, sondern geradlinig verläuft. Dabei kann nämlich insbesondere vorgesehen sein, den durch das Sauggebläse erzeugt Luftstrom mittels eines Rohrs, eines haubenartigen Gehäuses oder dergleichen zu kanalisieren. Die Wand des Rohrs bzw. des Gehäuses endet in einem bestimmten Abstand oberhalb des Förderbandes, so dass ein Spalt zwischen der Wand und dem Förderband verbleibt. Je nach der zu verarbeitenden Gutmischung und der Größe der darin enthaltenen Bestandteile bestimmt sich das Maß dieses Spaltes. Wenn bei bestimmten Anwendungen der Spalt vergleichsweise klein bemessen werden kann, kann die Absaugleistung des Gebläses möglicherweise ausreichen, um den gewünschten Trenneffekt zu bewirken, auch ohne dass die erwähnte Knickstelle im Förderband vorgesehen ist.

Ein Ausführungsbeispiel der Erfindung wird anhand der rein schematischen Darstellung nachfolgend näher erläutert.

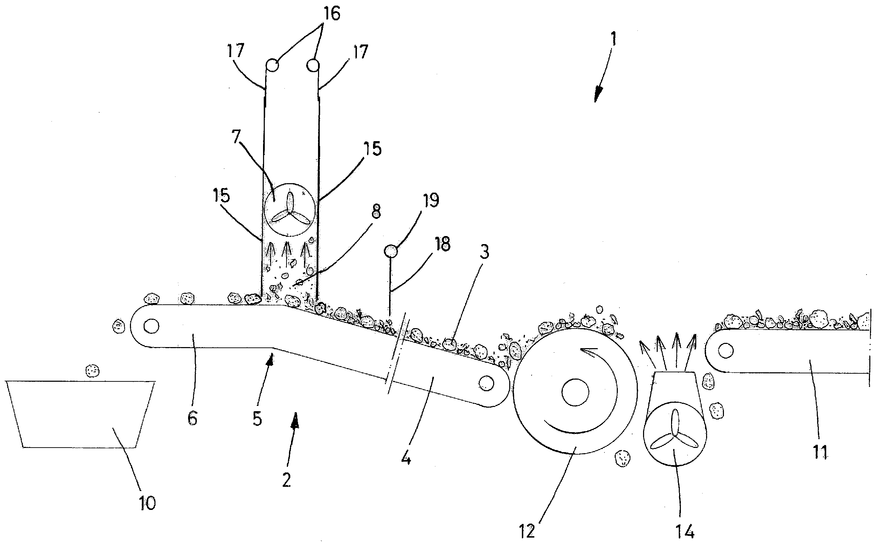

In der Zeichnung ist mit 1 insgesamt ein Windsichter bezeichnet, der ein Förderband 2 aufweist, welches eine Gutmischung 3 aufwärts fördert. Die Gutmischung 3 enthält leichtere und schwerere Bestandteile.

Das Förderband 2 weist einen ersten Abschnitt 4 auf, der schräg aufwärts verläuft und der an einer Knickstelle 5 in einen zweiten Abschnitt 6 übergeht, der weniger steil aufwärts verläuft, bei dem dargestellten Ausführungsbeispiel horizontal verläuft. Aufgrund der Laufgeschwindigkeit des Förderbandes 2 hebt die Gutmischung 3 kurz hinter der Knickstelle 5 kurzfristig vom Förderband 2 ab, bevor sie dann, nämlich auf dem zweiten Abschnitt 6, wieder auf dem Förderband 2 aufliegt. In dem Bereich, wo die Gutmischung 3 vom Förderband 2 abhebt, kann Luft auch unter die Gutmischung 3 bzw. in die Gutmischung 3 gelangen. Dabei ist oberhalb der Knickstelle 5 ein Gebläse 7 angedeutet, welches einen durch Pfeile angedeuteten, nach oben gerichteten Luftstrom erzeugt, der leichteres Gut 8 aus der Gutmischung 3 nach oben transportiert. Dabei wird ein regelrechter Strömungskanal geschaffen.

Während das leichtere Gut 8 durch das Gebläse 7 aus der Gutmischung 3 abgetrennt wird, gelangt der verbleibende Anteil der Gutmischung 3 am Ende des zweiten Abschnitts 6 vom Förderband 2 in einen dort bereitgestellten Container 10, wobei statt des Containers 10 dort auch eine weitere Fördereinrichtung vorgesehen sein kann, die diesen Rest der Gutmischung 3 beispielsweise auf eine Halde oder zu einer weiterverarbeitenden Anlage transportiert.

Die bisher beschriebenen Anlagenteile des Windsichters 1 dienen als zweite Trennstufe dazu, mittelschweres Gut der Gutmischung 3 von dem leichteren Gut 8 abzutrennen. Dieser zweiten Trennstufe vorgeschaltet ist eine erste Trennstufe, die ein Zuführungsband 11 aufweist, welches eine so genannte Grobmischung heranführt. Die Grobmischung enthält einerseits die gesamte Gutmischung 3, und darüber hinaus noch grobe Bestandteile, die als schweres Gut bezeichnet werden. Das Zuführungsband 11 endet im Abstand vor einer Trommel 12, deren oberer Trommelumfang sich in der Förderrichtung des Zuführungsbandes 11 dreht. Schwere Bestandteile fallen in den Spalt herab, der sich durch den Abstand zwischen Zuführungsband 11 und Trommel 12 ergibt. Die leichteren, verbleibenden Bestandteile der Grobmischung, nämlich die Gutmischung 3, gelangt vielmehr auf den oberen Bereich des Trommelumfangs, was nicht nur aufgrund der Laufgeschwindigkeit des Zuführungsbandes 11 und aufgrund der Positionierung des Zuführungsbandes 11 gegenüber der Trommel 12 bewirkt wird, sondern auch durch ein Stützgebläse 14 unterstützt wird, welches einen nach oben gerichteten Luftstrom in den Spalt zwischen Zuführungsband 11 und Trommel 12 bläst.

Um einen störungsfreien Betrieb des Windsichters 1 zu gewährleisten, ist vorschlagsgemäß vorgesehen, dass zu große Bestandteile der Gutmischung 3 die Absaugstelle unterhalb des Gebläses 7 problemlos passieren können. Dabei soll einerseits verhindert werden, dass sich diese zu großen Bestandteile vor der Absaugstelle ansammeln, und andererseits soll ebenso verhindert werden, dass sich diese zu großen Bestandteile unterhalb der Absaugstelle ansammeln. Zu groß sind in diesem Zusammenhang stets die Bestandteile der Gutmischung 3, die nicht durch den Spalt im Bereich der Absaugstelle passen.

Bei dem dargestellten Ausführungsbeispiel ist das Gebläse 7 innerhalb eines rein schematisch angedeuteten, haubenartigen Gehäuses angeordnet, welches nach unten offen ist und ansonsten feste Wände aufweist. Die Gebläseluft und die von ihr transportierten Bestandteile der Gutmischung 3 werden mittels einer Auslassöffnung nach oben oder seitlich aus dem Gehäuse heraus geführt.

Aus Übersichtlichkeitsgründen sind weder sämtliche Wandbestandteile noch die erwähnte Auslassöffnung des Gehäuses dargestellt. In Transportrichtung des Förderbandes 2 sind vor und hinter dem Gebläse 7 Wände 15 dieses Gehäuses dargestellt, welche höhenbeweglich ausgestaltet sind. Hierzu sind oberhalb der Wände 15 zwei Wickelachsen 16 angeordnet, und von jeder Wickelachse 16 erstrecken sich zwei oder mehr Wickelbänder 17 nach unten zu der jeweils darunter befindlichen und an diesen Wickelbändern 17 hängenden Wand 15.

Durch entsprechende Drehbewegung der Wickelachse 16 kann die damit verbundene Wand 15 wahlweise angehoben oder abgesenkt werden. Diese schematisch angedeutete Konstruktion stellt eine robuste und betriebssichere Möglichkeit dar, die Wände 15 innerhalb kurzer Zeit und gegebenenfalls nur für eine kurze Zeitdauer aus ihrer dargestellten Normalstellung anzuheben und wieder abzusenken.

Der Absaugstelle ist ein Sensor vorgeschaltet, der bei dem dargestellten Ausführungsbeispiel eine pendelbeweglich gelagerte Sensorklappe 18 umfasst, welche von einer horizontalen Achse 19 herabhängt. Durch ihr Eigengewicht, und gegebenenfalls durch eine Feder unterstützt ist die Sensorklappe 18 bestrebt, automatisch diese nach unten hängende Normalstellung einzunehmen. Der Widerstand, gegen welchen die Sensorklappe 18 aus ihrer Normalstellung ausgelenkt und um die Achse 19 geschwenkt werden kann, kann durch das Eigengewicht der Sensorklappe 18, durch die Stärke der erwähnten Feder, und / oder durch ein jenseits der Achse 19 befindliches Gegengewicht beeinflusst werden.

Die Sensorklappe 18 endet in einem Abstand oberhalb des Förderbandes 2, welcher dem Spalt zwischen den Wänden 15 und dem Förderband 2 entspricht. Geraten zu große Bestandteile der Gutmischung 3 gegen die Sensorklappe 18, nämlich Bestandteile, die höher sind als der erwähnte Spalt, so wird die pendelbeweglich aufgehängte Sensorklappe 18 durch diese Bestandteile aus ihrer nach unten hängenden Normalstellung ausgelenkt.

Diese Bewegung der Sensorklappe 18 wird mittels eines Sensors erfasst. Ein von diesem Sensor ausgegebenes Sensorsignal wird in einer Anlagensteuerung verarbeitet, und die Anlagensteuerung steuert ihrerseits die Wickelachsen 16 an, so dass die beiden Wände 15 für eine kurze Zeitdauer angehoben werden. Diese Zeitdauer ist so bestimmt, dass der zu große Bestandteil der Gutmischung 3 die Absaugstelle passieren kann und sich in Förderrichtung des Förderbandes 2 hinter der hinteren Wand 15 befindet, also gemäß der Zeichnung links von der linken Wand 15. Nachdem dieser Bestandteil die Absaugstelle passiert hat, werden die Wände 15 wieder abgesenkt.

Bei dieser Ausgestaltung, welche für die Bewegung der Wände 15 eine Steuerung vorsieht, kann vorteilhaft vorgesehen sein, dass die Wände 15 stets nur um das geringstmögliche Maß angehoben werden. Auf diese Weise wird eine möglichst hohe Effektivität der Absaugeinrichtung gewährleistet, indem der Spalt zwischen den beiden Wänden 15 und dem Förderband 2 stets so klein wie möglich gehalten wird. Beispielsweise kann anhand des Winkels, um welchen die Sensorklappe 18 ausgelenkt wird, das Maß bestimmt werden, um welches die Wände 15 angehoben werden. Größere Gegenstände lenken die Sensorklappe 18 um einen größeren Winkel aus ihrer nach unten hängenden Normalstellung aus als kleinere Gegenstände. Dementsprechend werden die Wände 15 höherer angehoben, um diese größeren Gegenstände passieren zu lassen, als bei kleineren zu großen Gegenständen.

Alternativ zu der beschriebenen Ausgestaltung des Ausführungsbeispiels kann vorgesehen sein, dass die Sensoreinrichtung mit der Sensorklappe 18 nicht mit einer Anlagensteuerung zusammenwirkt, sondern unmittelbar als Schalter für die Wickelachsen 16 dient. Durch Betätigung des Schalters, nämlich durch entsprechende Auslenkung der Sensorklappe 18, werden bei dieser Ausgestaltung die Wände 15 mittels der Wickelachsen 16 für eine vorbestimmte Zeitdauer angehoben und nach diesem Zeitablauf wieder abgesenkt.

Eine noch weitere Vereinfachung kann in Form einer anderen Alternative dieses Ausführungsbeispiels ermöglicht werden, nämlich indem unter Verzicht auf eine Sensoreinrichtung die beiden Wände 15 in regelmäßigen zeitlichen Abständen kurz angehoben und anschließend wieder abgesenkt werden. Zu große Bestandteile der Gutmischung 3 lagern sich bei dieser Variante zunächst vor der in Förderrichtung ersten Wand 15 an, können jedoch die Absaugstelle passieren, wenn die beiden Wände 15 angehoben werden.

## Patentansprüche

1. Windsichter (1),
mit einem eine Gutmischung (3) fördernden Förderband (2),
und einem einen vom Förderband (2) nach oben strömenden Luftstrom erzeugenden, leichteres Gut (8) aus der Gutmischung (3) nach oben transportierenden Gebläse (7), wobei das Förderband (2) einen ersten Abschnitt (4) aufweist, welcher in einer ersten Ebene verläuft,
sowie einen zweiten Abschnitt (6), der in Förderrichtung hinter dem ersten Abschnitt (4) angeordnet ist und der im Vergleich zum ersten Abschnitt (4) in einer weiter nach unten gerichteten Ebene verläuft,
wobei der Bereich des Übergangs vom ersten Abschnitt (4) zum zweiten Abschnitt (6) als Knickstelle (5) ausgestaltet ist,
**dadurch gekennzeichnet,**
**dass** vor und hinter der Gebläsestelle zwei Wände (15) angeordnet sind, derart, dass diese den nach oben strömenden Luftstrom kanalisieren,
und **dass** die vor und hinter der Gebläsestelle angeordneten Wände (15) in der Höhe beweglich sind und zur Höhenverstellung motorisch angetrieben sind,
wobei eine der zwei höhenbeweglichen Wänden (15) über wenigstens ein Wickelband (17) mit einer Wickelachse (16) verbunden ist, derart, dass je nach Drehrichtung der Wickelachse (16) die Wand (15) wahlweise aufwärts oder abwärts beweglich ist.

2. Windsichter nach Anspruch 1,
**dadurch gekennzeichnet,**
**dass** das Gebläse (7) als Sauggebläse ausgestaltet und oberhalb des Förderbandes (2) angeordnet ist.

3. Windsichter nach Anspruch 1 oder 2,
**dadurch gekennzeichnet,**
**dass** die Gebläsestelle von einem Gehäuse umgeben ist, welches oberhalb des Förderbandes (2) angeordnet ist und nach unten offen ist, derart, dass das Gehäuse den nach oben strömenden Luftstrom kanalisiert.

4. Windsichter nach einem der vorhergehenden Ansprüche,
**dadurch gekennzeichnet,**
**dass** die Wände (15) in einem bestimmten Abstand über dem Förderband (2) enden,
und das dem Antrieb der höhenbeweglichen Wände ein Sensor zugeordnet ist,
welcher in Förderrichtung des Förderbandes (2) vor der Gebläsestelle und oberhalb des Förderbandes (2) in der Art angeordnet ist, dass Bestandteile der Gutmischung sensorisch erfassbar sind welche größer sind als der genannte Abstand,
und **dass** der Sensor mit dem motorischen Antrieb der Wände (15) wirksam verbunden ist, derart, dass bei sensorischer Erfassung eines entsprechend großen Bestandteils der Gutmischung die Wände (15) ausreichend weit angehoben werden können, um eine Passage dieses Bestandteils unter den Wänden (15) hindurch zu ermöglichen.

5. Windsichter nach Anspruch 4,
**dadurch gekennzeichnet,**
**dass** der Sensor als eine pendelbewegliche Sensorklappe (18) ausgestaltet ist.

6. Windsichter nach einem der vorhergehenden Ansprüche,
**dadurch gekennzeichnet,**
**dass** dem Förderband (2) eine Trommel (12) vorgeschaltet ist,
deren oberer Trommelumfang sich in Förderrichtung eines eine Grobmischung heranführenden Zuführungsbandes (11) dreht,
und die im Abstand hinter dem Zuführungsband (11) angeordnet ist,
und der Windsichter (1) ein einen zwischen dem Zuführungsband (11) und der Trommel (12) nach oben strömenden Luftstrom erzeugendes, die Gutmischung (3) aus der Grobmischung nach oben transportierendes Stützgebläse (14) aufweist.

## Claims

1. Air classifier (1) having a conveyor belt (2) to convey a material mixture (3) and a blowing element (7) to set up an air current flowing upwards from the conveyor belt (2) and to carry lighter material (8) from the material mixture (3) upwards,
wherein the conveyor belt (2) incorporates a first section (4) that extends in a first plane and a second section (6) that is arranged downstream of the first section (4) and that compared with the first section (4) extends in a plane oriented further downwards,
wherein the area of transition from the first section (4) to the second section (6) is designed as a bend point (5),
**characterised in that** two walls (15) are arranged upstream of and downstream of the blowing element position such that these walls channel the upwards flowing air current and that the walls (15) arranged upstream of and downstream of the blowing element position can be adjusted in height and are driven by a motor for height adjustment,
wherein one of the two vertically moveable walls (15) is connected to a winding spindle (16) by at least one winding belt (17) such that the wall (15) can be moved optionally upwards or downwards according to the direction of rotation of the winding spindle (16).

2. Air classifier in accordance with claim 1, **characterised in that** the blowing element (7) is designed as a sucking element and is arranged above the conveyor belt (2).

3. Air classifier in accordance with claim 1 or 2, **characterised in that** the blowing element position is enclosed in a housing that is arranged above the conveyor belt (2) and is open at the bottom such that the housing channels the upwards flowing air current.

4. Air classifier in accordance with any one of the foregoing claims,
**characterised in that** the walls (15) end a specific distance above the conveyor belt (2), and that a sensor is assigned to the drive of the height-adjustable walls and is arranged upstream of the blowing element position and above the conveyor belt (2) in such a way that components of the material mixture that are wider than the aforementioned distance are detected by the sensor,
and that the sensor is effectively connected to the motor drive of the walls (15) such that, if a correspondingly sized component of the material mixture is detected by the sensor, the walls (15) can be raised far enough to enable this component to pass under the walls (15).

5. Air classifier in accordance with claim 4,
**characterised in that** the sensor is designed as a swinging sensor flap (18).

6. Air classifier in accordance with any one of the foregoing claims,
**characterised in that** a drum (12) the upper circumference of which rotates in the direction of conveyance of a feed belt (11) conveying a coarse mixture and which is arranged at a distance behind the feed belt (11) is disposed upstream of the conveyor belt (2), and that the air classifier (1) incorporates a booster blowing element (14) to set up an upwards flowing air current between the feed belt (11) and the drum (12) and to carry the material mixture (3) upwards out of the coarse mixture.

## Revendications

1. Séparateur pneumatique (1) comprenant un tapis convoyeur (2) transportant un mélange de produits (3)
et une soufflerie (7) qui génère un flux d'air s'écoulant vers le haut depuis le tapis convoyeur (2) et qui transporte vers le haut un produit plus léger (8) provenant du mélange de produits (3),
sachant que le tapis convoyeur (2) présente un premier segment (4) circulant sur un premier niveau, ainsi qu'un deuxième segment (6) qui observé dans le sens de convoyage est disposé en aval du premier segment (4) et qui, comparé au premier segment (4), circule sur un autre niveau conduisant vers le bas,
sachant que la zone de transition entre le premier segment (4) et le deuxième segment (6) est configurée comme zone coudée (5),
**caractérisé en ce qu'**en amont et en aval de l'emplacement de la soufflerie sont disposées deux parois (15) de sorte qu'elles canalisent le flux d'air sortant vers le haut et **en ce que** les parois (15) disposées en amont et en aval de l'emplacement de la soufflerie sont mobiles en hauteur et qu'elles sont entraînées par moteur pour ajuster leur hauteur,
sachant que l'une des deux parois (15) mobiles en hauteur est reliée à un axe d'enroulement (16) via au moins un ruban d'enroulement (17) de sorte que suivant le sens de rotation de l'axe d'enroulement (16) la paroi (15) est déplaçable au choix vers le haut ou vers le bas.

2. Séparateur pneumatique selon la revendication 1, **caractérisé en ce que** la soufflerie (7) est configurée comme soufflerie aspirante et qu'elle est disposée au dessus du tapis convoyeur (2).

3. Séparateur pneumatique selon la revendication 1 ou 2, **caractérisé en ce que** l'emplacement de la soufflerie est entouré d'un boîtier disposé au dessus du tapis convoyeur (2) et ouvert vers le bas de sorte que le boîtier canalise le flux d'air s'écoulant vers le haut.

4. Séparateur pneumatique selon l'une des revendications précédentes,
**caractérisé en ce que** les parois (15) se terminent à une certaine distance au dessus du tapis convoyeur (2),
et **en ce qu'**à l'entraînement des parois mobiles en hauteur est affecté un capteur disposé, dans le sens de convoyage du tapis convoyeur (2), en amont de l'emplacement de la soufflerie et au-dessus du tapis convoyeur (2), de sorte que les éléments constitutifs du mélange de produits d'une taille supérieure à l'écart indiqué sont saisissables par la saisie sensorielle,
et **en ce que** le capteur est relié activement avec l'entraînement motorisé des parois (15) de sorte que lors de la saisie sensorielle d'un élément d'une grande taille correspondante, constitutif du mélange de produits, les parois (15) peuvent être montées suffisamment haut pour permettre le passage de cet élément constitutif sous les parois (15).

5. Séparateur pneumatique selon la revendication 4,
**caractérisé en ce que** le capteur est configuré sous forme de trappe détectrice (18) exécutant un mouvement pendulaire.

6. Séparateur pneumatique selon l'une des revendications précédentes,
**caractérisé en ce qu'**en amont du tapis convoyeur (2) est placé un tambour (12) dont la partie supérieure de la circonférence tourne dans le sens de convoyage d'un tapis (11) d'alimentation amenant un mélange grossier, tambour qui est disposé à distance en aval du tapis d'alimentation (11)
et **en ce que** le séparateur pneumatique (1) présente une soufflerie de soutien (14) qui génère un flux d'air s'écoulant vers le haut entre le tapis d'alimentation (11) et le tambour (12) et qui transporte le mélange de produits (3) vers le haut hors du mélange grossier.
